# EUROPEAN PATENT APPLICATION

(11) **EP 2 722 909 A1**
(43) Date of publication of application: **23.04.2014**
(21) Application number: 12800576.6
(22) Date of filing: 15.06.2012
(51) Int. Cl.: H01M 2/10, H01G 2/04, H01G 9/26, H01M 2/20

(54) **ELECTROCHEMICAL CELL MODULE, ELECTROCHEMICAL CELL MODULE UNIT, AND HOLDER**

(30) Priority: 17.06.2011 JP 2011135764; 26.01.2012 JP 2012014411
(71) Applicant: Shin-Kobe Electric Machinery Co., Ltd., Tokyo 104-0044 (JP)
(72) Inventor: MATSUURA , Takahiro, Tokyo 104-0044 (JP); SAKURAI , Atsushi, Tokyo 104- 0044 (JP); SHIKAMA , Tadashi, Tokyo 104 - 0044 (JP); HAMA , Yoshiki, Tokyo 104-0044 (JP); IIDA , Yukio, Tokyo 104- 0044 (JP); WAKAMATSU , Yoshimi, Tokyo 104-0044 (JP); TSUCHIYA , Takayuki, Tokyo 104- 0044 (JP)
(74) Representative: Calderbank, Thomas Roger
(86) International application number: PCT/JP2012/065382
(87) International publication number: WO 2012/173233

(57) **Abstract**

Provided is an electrochemical cell module unit in which a plurality of electrochemical cell modules may be electrically and mechanically connected with a simple structure. In an electrochemical cell module unit 100, two adjacent electrochemical cell modules 1 and 101 are juxtaposed to form one through hole 41 by abutting side wall portions 22E and 22 and bottom wall portions 21E and 21F. The electrochemical cell module 1 of the two adjacent electrochemical cell modules 1 and 101 exposes a terminal portion 18B of a bus bar 18 at the bottom wall opening portion 21E. The electrochemical cell module 101 of the two adjacent electrochemical cell modules 1 and 101 exposes a terminal portion 17' B of a bus bar 17' at the bottom wall opening portion 21F. The bottom wall opening portions 21E and 21F form the through hole 41. Then, the two adjacent electrochemical cell modules are electrically and mechanically connected by connecting two terminal portions 18B and 17' B located in the through hole 41, with a bolt.

## Description

### TECHNICAL FIELD

The present invention relates to an electrochemical cell module unit formed by juxtaposing two or more electrochemical cell modules each assembled by a plurality of electrochemical cells, an electrochemical cell module used for the unit, and a holder used for the module.

### BACKGROUND ART

JP 2006-99997A (Patent Document 1) discloses a battery module (electrochemical cell module) of the following structure. In this structure, holders are respectively disposed on both ends of an assembled battery (cell group), and a pillar configured to define an interval between the two holders is disposed. The assembled battery includes a plurality of cylindrical batteries (type of electrochemical cells) arranged juxtaposedly. Each of the cylindrical batteries includes a projection electrode at one end thereof and a planar electrode at the other end thereof. The plurality of batteries are electrically connected to metal bus bars insert molded within each holder. Then, terminal fittings configured to extract an output from the battery module are provided at the holder. JP 2003-45504A (Patent Document 2) and JP 2001-325931A

(Patent Document 3) each also discloses a battery module formed by using similar holders. Each of these patent documents also discloses an electrochemical cell module unit formed by combining a plurality of the battery modules (electrochemical cell modules) connected in series or parallel.

### PRIOR ART DOCUMENTS

### PATENT DOCUMENTS

Patent Document 1: JP 2006-99997A
Patent Document 2: JP 2003-45504A
Patent Document 3: JP 2001-325931A

### SUMMARY OF INVENTION

### TECHNICAL PROBLEM

In the electrochemical cell module unit disclosed in each of Patent Document 1 to 3, however, the plurality of electrochemical cell modules cannot be connected with a simple structure. Further, in the conventional electrochemical cell modules, the holder with the bus bars insert molded therein is used. Thus, the holder has low versatility. Then, the inventors of this application have conceived to fabricate a cell assembly where bus bars are connected to a cell group in advance and to fit holders on both sides of this cell assembly. However, there is no existing holder with high versatility that may be applied to various wiring patterns.

An object of the present invention is to provide an electrochemical cell module unit in which a plurality of electrochemical cell modules may be electrically and mechanically connected with a simple structure.

Another object of the present invention is to provide an electrochemical cell module including holders with a high versatility, and a holder suitable for use for the electrochemical cell module.

### SOLUTION TO PROBLEM

The present invention targets an electrochemical cell module unit formed by combining a plurality of electrochemical cell modules obtained by moduling electrochemical cells such as batteries or capacitors. The plurality of electrochemical cell modules each comprise a cell assembly and first and second holders. The cell assembly comprises a cell group including a plurality of cylindrical electrochemical cells arranged juxtaposedly; and a plurality of bus bars disposed on both sides of an extending direction of the plurality of cylindrical electrochemical cells of the cell group and connected to one or more of the electrodes of one or more of the cylindrical electrochemical cells so that the plurality of electrochemical cells are electrically connected with a predetermined wiring pattern. Each of the plurality of cylindrical electrochemical cells includes electrodes at both ends thereof. The first holder is fitted on one end of the cell assembly, located in the extending direction of the plurality of electrochemical cells. The second holder is fitted on the other end of the cell assembly, located in the extending direction of the plurality of electrochemical cells. The first and second holders each comprise: a bottom wall portion having first to fourth sides and opposed to the one end of the cell assembly; and a peripheral wall portion constituted from four side wall portions configured to rise from the first to fourth sides of the bottom wall portion and to extend toward the cell assembly. Then, one side wall opening portion is provided in one of the four side wall portions of the first holder or the second holder in each of every adjacent two of the electrochemical cell modules. The one of the four side wall portions of the first holder or the second holder in one of the adjacent two of the electrochemical cell modules is in contact with the one of the four side wall portions of the first holder or the second holder in the other of the adjacent two of the electrochemical cell modules. The one side wall opening portion in each of every adjacent two of the electrochemical cell modules is configured to allow a terminal portion of the bus bar to come out therefrom to an outside, and a bottom wall opening portion continuous with the one side wall opening portion is provided in the bottom wall portion of the first holder or the second holder. The adjacent two of the electrochemical cell modules are juxtaposed to form one through hole by abutting the side wall opening portions and the bottom wall opening portions of the adjacent two of the electrochemical cell modules. The adjacent two of the electrochemical cell modules each expose the terminal portion of one of the bus bars at the bottom wall opening portion configured to form the through hole, and the adjacent two of the electrochemical cell modules are electrically connected by connection of two of the terminal portions located in the through hole. When the terminal portions of the adjacent two of the electrochemical cell modules are connected in the through hole formed between the adjacent two of the electrochemical cell modules as in the present invention, the adjacent two of the electrochemical cell modules may be electrically and mechanically connected with a simple structure. Further, when such a structure is adopted, electrical connection may be made at abutting portions of the adjacent two of the electrochemical cell modules. A variation of a pattern for the connection may be thereby increased.

The electrochemical cell module unit of the present invention is formed on the basis of each module row formed by disposing a plurality of electrochemical cell modules to form a row. The electrochemical cell module unit has a structure in which a plurality of module rows are juxtaposed. The plurality of module rows are each formed by disposing the plurality of the electrochemical cell modules to form a row. The electrochemical cell modules located on both ends of the plurality of module rows each include another side wall opening portion in another one of the four side wall portions opposed to the one of the four side wall portions with the one side wall opening portion formed therein, and exposes one of the bus bars as an output bus bar from the another side wall opening portion. Then, a plurality of the output bus bars in the plurality of module rows are connected by electrical connection means such as connecting bus bars or lead wires so that the plurality of module rows are connected in series or in parallel. By connecting the plurality of module rows by the electrical connection means in this manner, the electrochemical cell module unit that may output a necessary voltage and provide a necessary capacity may be readily constructed.

Preferably, a control box with a plurality of circuit substrates for voltage control held therein may be disposed on one end of the plurality of module rows. Each circuit substrate is configured to control a voltage of each of the plurality of module rows. Then, preferably, status display means for indicating a status of each of the module rows is disposed on a side surface of the control box located on the one end of the module rows. When the control box is employed, manufacture of the electrochemical cell module unit is facilitated because the control box may be manufactured in advance. When the status display means is provided at the control box, the status of each module row may be readily checked visually.

The plurality of module rows may be disposed adjacent to each other in a vertical direction. In this case, the plurality of the bottom wall portions of the plurality of the first holders of the plurality of electrochemical cell modules in the plurality of module rows may be covered with one insulating resin sheet. Further, the plurality of the bottom wall portions of the plurality of the second holders of the plurality of electrochemical cell modules in the plurality of module rows may be covered with one insulating resin sheet. When such insulating resin sheets are provided, occurrence of a short circuit with a different device disposed around the electrochemical cell module unit may be prevented.

When the plurality of module rows are disposed adjacent to each other in the vertical direction, a plurality of the first holders included in an uppermost one of the module rows may be respectively connected by a first connecting plate. A plurality of the second holders included in the uppermost one of the module rows may be respectively connected by a second connecting plate. Then, a plurality of the first holders included in an upper one of every two module rows adjacent in the vertical direction and a plurality of the first holders included in a lower one of the two module rows adjacent in the vertical direction may be connected by a third connecting plate. A plurality of the second holders included in the upper one of the two module rows adjacent in the vertical direction and a plurality of the second holders included in the lower one of the two module rows adjacent in the vertical direction may be then connected by a fourth connecting plate. When the number of the module rows is set to n (n being an integer of two or more), the number of third connecting plates and the number of fourth connecting plates are respectively set to n-1. A first slide rail may be fixed under a plurality of the first holders included in a lowermost one of the module rows. A second slide rail may be fixed under a plurality of the second holders included in the lowermost one of the module rows. With this arrangement, when the plurality of module rows are disposed adjacent to each other in the vertical direction, a robust structure may be constructed, without using a case. In addition, by providing the first slide rail and the second slide rail, the following advantage may be obtained. That is, mounting, inspection, and replacement of the electrochemical cell module unit are facilitated.

One end surface of the plurality of module rows excluding at least the electrical connection means may be covered with an insulating resin plate. The other end surface of the plurality of module rows excluding at least the electrical connection means may also be covered with an insulating resin plate. When such insulating resin plates are employed, occurrence of a short circuit with a device disposed around the electrochemical cell module unit may be prevented.

Preferably, an insulating resin plate is disposed through a plurality of spacers so that the insulating resin plate opposes a side surface where the fourth connecting plate for the plurality of module rows is located. When such an arrangement is made, a space for the dimension of the spacers may be clearly secured in terms of a device in the vicinity of the electrochemical cell module unit. A path for lead wires from each electrochemical cell module to one of the circuit substrates for voltage control may be secured through this space.

Preferably, one or more of the side wall opening portions configured to allow the terminal portion of the bus bar to come out therefrom are provided in each of first to fourth side wall portions. Then, preferably, a space surrounded by the first to fourth side wall portions and the bottom wall portion is a continuous space configured to communicate with all of the side wall opening portions and to receive the plurality of bus bars. Each of the holders as mentioned above includes the one or more of the side wall opening portions configured to allow the terminal portion of the bus bar to come out therefrom in each of the first to fourth side wall portions. Then, the holder includes the continuous space in its inside. Thus, various bus bars may be exposed from the holder in arbitrary directions. As a result, various wiring patterns may be implemented.

A side wall opening portion shaped to allow the bus bar to come out therefrom and to extend in a plurality of different directions may be used as one of the side wall opening portions provided in at least one of the first to fourth side wall portions of each holder. When such a side wall opening portion is employed, versatility may be further increased.

Preferably, this side wall opening portion and the bottom wall opening portion continuous with the side wall opening portion are respectively shaped to be plane-symmetrical with respect to a first virtual surface orthogonal to the bottom wall portion and passing through the centers of the first and third side wall portions. Preferably, the bottom wall opening portion in particular has a V-shaped contour in which the bottom wall opening portion widens away from the first virtual surface and toward the side wall opening portion. When the V-shaped contour is employed, the extending direction of each bus bar to the outside may be changed in a wider range.

Two side wall opening portions may be provided in each of the second and fourth side wall portions opposed to each other in the first to fourth side wall portions. Preferably, the two side wall opening portions are each shaped to allow the terminal portion of the bus bar to come out therefrom and to extend in one direction, and the two side wall opening portions are shaped to be plane-symmetrical with respect to a second virtual surface orthogonal to the bottom wall portion and passing through the centers of the second and fourth side wall portions. With this arrangement, the number of options of pull-out positions of bus bars is increased. The versatility is further enhanced.

The first and second holders may have a same shape and may be fitted on the both ends of the cell assembly in a symmetrical manner. With this arrangement, the holder of a single shape may be used. Thus, the cost of the holders may be reduced. Further, when the plurality of electrochemical cell modules are connected, connection work may be performed in a uniform manner.

In particular, the terminal portion of the output bus bar may be exposed from one side wall opening portion opening in the second side wall portion in one of the electrochemical cell modules, and the terminal portion of the output bus bar may be exposed from one side wall opening portion opening in the second side wall portion in the other of the electrochemical cell modules. The terminal portions of the output bus bars in such an electrochemical cell module unit may be thereby made to come out and to extend in a same direction.

Alternatively, the terminal portion of the output bus bar may be exposed from one side wall opening portion opening in the third side wall portion in one of the electrochemical cell modules, and the terminal portion of the output bus bar may be exposed from one side wall opening portion opening in the first side wall portion in the other of the electrochemical cell modules. With this arrangement, the terminal portions of the output bars may be exposed on both sides of the extending directions of two of the electrochemical cell modules. Thus, there is no need for using a different connection conductor in order to connect a large number of the electrochemical cell modules in series.

Two of the electrochemical cell modules may be connected by common connecting plates extending over the respective first holders and the respective second holders of the two electrochemical cell modules in boundary regions between the two electrochemical cell modules. When such common connecting plates are employed, connection strength of the two electrochemical cell modules may be enhanced.

In the connected two electrochemical cell modules, auxiliary connecting plates may be located in the both sides of the common connecting plate, the auxiliary connecting plate connecting the first holder and the second holder of the electrochemical cell module. When the auxiliary connecting plates are employed, the first and second holders of the electrochemical cell module may be clearly prevented from coming off from the cell assembly.

Assume that in each of the plurality of electrochemical cell module unit, the output bus bars come out on both sides of the juxtaposing direction of every adjacent two of the electrochemical cell modules. Then, assume that the plurality of the electrochemical cell module units are juxtaposed so that the terminal portions of the output bus bars form a terminal column on each side of the electrochemical cell module units. In this electrochemical cell module unit formed of the plurality of the electrochemical cell modules, the terminal portions configured to form the terminal column may be electrically connected by connection conductors. With this arrangement, two of the electrochemical chemical cell module units may be electrically connected in parallel.

An electrochemical cell module that may be used for the unit of the present invention comprises a cell assembly and first and second holders. The cell assembly comprises: a cell group including a plurality of cylindrical electrochemical cells arranged juxtaposedly; and a plurality of bus bars disposed on both sides of an extending direction of the plurality of cylindrical electrochemical cells of the cell group and connected to one or more of the electrodes of one or more of the cylindrical electrochemical cells so that the plurality of electrochemical cells are electrically connected with a predetermined wiring pattern. Each of the cylindrical electrochemical cells includes electrodes at both ends of the cylindrical electrochemical cell. The first holder is fitted on one end of the cell assembly, located in the extending direction of the plurality of electrochemical cells. A second holder is fitted on the other end of the cell assembly, located in the extending direction of the plurality of electrochemical cells. The first and second holders each comprise: a bottom wall portion having first to fourth sides and opposed to the one end of the cell assembly; and a peripheral wall portion constituted from first to fourth side wall portions configured to rise from the first to fourth sides of the bottom wall portion and to extend toward the cell assembly. One or more side wall opening portions are provided in each of the first to four side wall portions. The one or more side wall opening portions are each configured to allow a terminal portion of each of the bus bars to come out therefrom to an outside. A space surrounded by the first to fourth side wall portions and the bottom wall portion is a continuous space configured to communicate with all of the side wall opening portions and to receive the plurality of bus bars. The first and second holders used in the present invention each include the one or more opening portions each configured to allow the terminal portion of each of the bus bars to come out therefrom to the outside. In addition, each of the first and second holders includes the continuous space in its inside. Thus, various bus bars may be exposed from the holder in an arbitrary direction. As a result, various wiring patterns may be implemented.

A pair of mounting holes may be formed in the first side wall portion on both sides of an extending direction of the first side. The pair of mounting holes are located on a third virtual surface extending in parallel with the bottom wall portion. A pair of mounting holes may be formed in the second side wall portion on both sides of an extending direction of the second side. The pair of mounting holes are located on a fourth virtual surface extending in parallel with the third virtual surface. A pair of mounting holes may be formed in the third side wall portion on both sides of an extending direction of the third side. The pair of mounting holes are located on the third virtual surface extending in parallel with the bottom wall portion. A pair of mounting holes may be formed in the fourth side wall portion on both sides of an extending direction of the fourth side. The pair of mounting holes are located on the fourth virtual surface extending in parallel with the third virtual surface. Assume such mounting holes are provided. Then, when the plurality of the electrochemical modules are connected with connection conductors, the plurality of the electrochemical modules may be attached without mutual interference between the connection conductors provided for difference surfaces.

A holder of the present invention is to be fitted on each side of a cell assembly located in an extending direction of a plurality of cylindrical electrochemical cells in an electrochemical cell module. The cell assembly comprises: a cell group including a plurality of cylindrical electrochemical cells arranged juxtaposedly; and a plurality of bus bars disposed on both sides of the extending direction of the plurality of cylindrical electrochemical cells of the cell group and connected to one or more of the electrodes of one or more of the cylindrical electrochemical cells so that the plurality of electrochemical cells are electrically connected with a predetermined wiring pattern. Each of the plurality of cylindrical electrochemical cells includes electrodes at both ends of the cylindrical electrochemical cell. The holder comprises: a peripheral wall portion constituted from first to fourth side wall portions configured to rise from the first to fourth sides of the bottom wall portion and to extend toward the cell assembly. One or more side wall opening portions are provided in each of the first to fourth side wall portions. The one or more side wall opening portions each allow a terminal portion of the bus bar to come out therefrom to an outside. Then,a space surrounded by the first to fourth side wall portions and the bottom wall portion is a continuous space configured to communicate with all of the side wall opening portions and to receive the plurality of bus bars.

### BRIEF DESCRIPTION OF DRAWINGS

Fig. 1 is a perspective view used for explaining a configuration of an electrochemical cell module used in an embodiment.
Fig. 2 is a perspective view of each of first and second holders used in the electrochemical cell module in Fig. 1.
Fig. 3 is a plan view of each of the first and second holders used in the electrochemical cell module in Fig. 1.
Fig. 4 is a perspective view used for explaining a configuration of an electrochemical cell module used in the embodiment.
Fig. 5 is a perspective view used for explaining a configuration of an electrochemical cell module used in an embodiment.
Fig. 6 is a perspective view used for explaining a configuration of an electrochemical cell module used in an embodiment.
Fig. 7 is a perspective view of an example of an electrochemical cell module unit in a first embodiment formed by juxtaposing two types of the electrochemical cell modules.
Figs. 8A to 8F are six views of the electrochemical cell module unit in Fig. 7.
Fig. 9 is a perspective view of an electrochemical cell module unit in a second embodiment of the present invention formed by juxtaposing a same kind of the electrochemical cell modules.
Fig 10 is a perspective view of an electrochemical cell module unit formed by juxtaposing two of the electrochemical cell module units in Fig. 9.
Fig. 11 is a perspective view of an electrochemical cell module unit in a third embodiment of the present invention.
Figs. 12A to 12F are a top view, a front view, a bottom view, a back view, a left side view, and a right side view of the electrochemical cell module unit in the third embodiment.
Fig. 13 is a front view of the electrochemical cell module unit with an insulating resin sheet that covers the side surface of the electrochemical cell module unit on a front side and a connecting plate removed therefrom.
Fig. 14A is a sectional view of Fig. 12A taken along a line A - A, while Fig. 14B is a sectional view of Fig. 12A taken along a line B - B.

### DESCRIPTION OF EMBODIMENTS

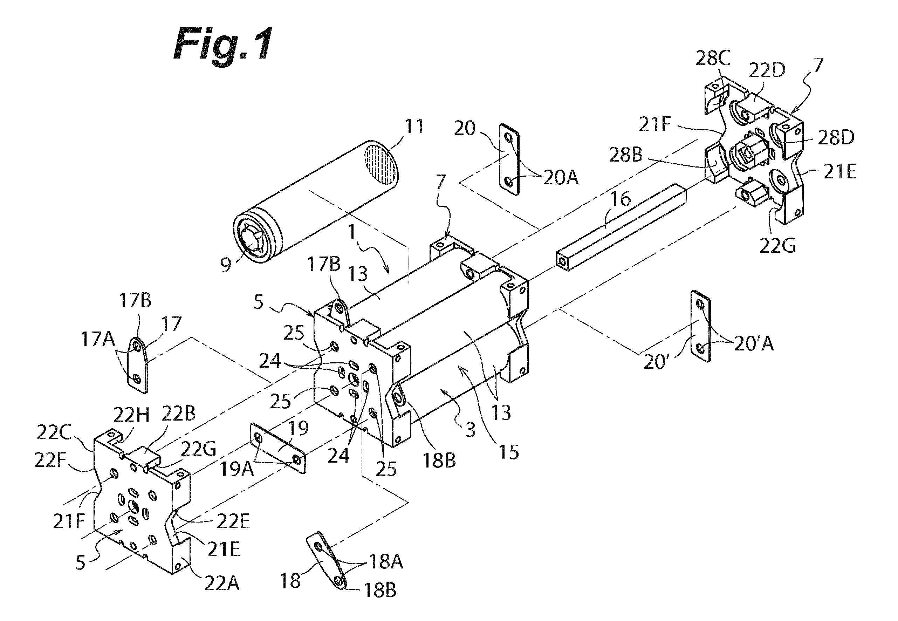

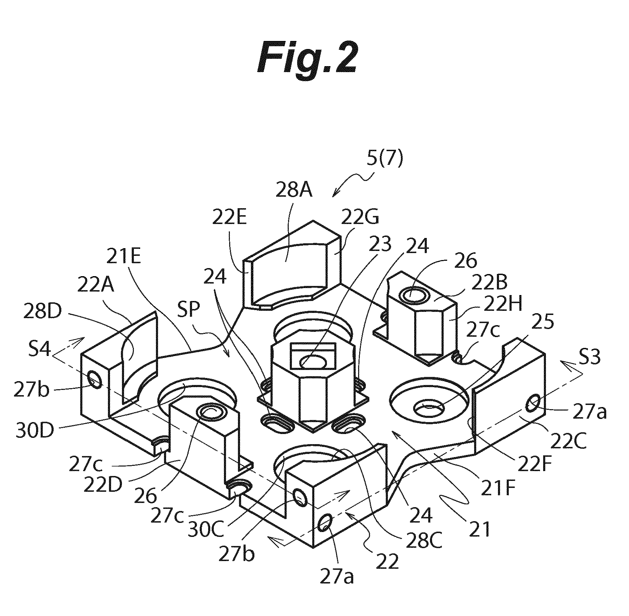

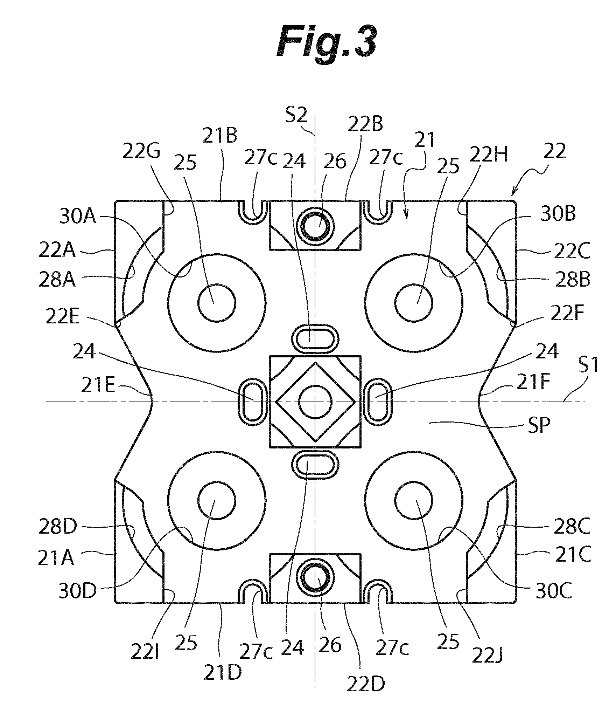

Embodiments of an electrochemical cell module unit of the present invention will be described below with reference to drawings. Fig. 1 shows a perspective view used for explaining a configuration example of an electrochemical cell module 1, which is a first electrochemical cell module that may be used for an electrochemical cell module unit in an embodiment of the present invention. Figs. 2 and 3 are a perspective view and a plan view of each of first and second holders used for the electrochemical cell module 1 in the embodiment shown in Fig. 1.

This electrochemical cell module 1 comprises a cell assembly 3, a first holder 5, and a second holder 7. The cell assembly 3 comprises a cell group 15 and bus bars 17 to 20', as shown in Fig. 1. The cell group includes four cylindrical lithium ion capacitors 13 arranged juxtaposedly. Each of the four cylindrical lithium ion capacitors 13 is a type of a cylindrical electrochemical cell, and includes a projection electrode 9 at an end thereof and a planar electrode 11 at the other end thereof. The bus bars 17 to 20' are disposed on both sides of an extending direction of the four lithium ion capacitors 13 included in the cell group 15, and are welded to the electrodes of the four lithium ion capacitors 13. In this example, the four lithium ion capacitors 13 are disposed oriented differently from each other so as to provide a wiring pattern in which the four lithium ion capacitors 13 are connected in series by five bus bars 17 to 20'. That is, the projection electrode 9 of the lithium ion capacitor 13 on the left side of the upper stage of the cell group 15 is connected to bus bar 17, the planar electrode of the lithium ion capacitor 13 on the right side of the upper stage of the cell group 15 is connected to the bus bar 18, and the planar electrode of the lithium ion capacitor 13 on the left side of the lower stage of the cell group 15 and the projection electrode of the lithium ion capacitor 13 on the right side of the lower stage of the cell group 15 are connected to the bus bar 19. Then, the planar electrode of the lithium ion capacitor 13 on the left side of the upper stage of the cell group 15 and the projection electrode of the lithium ion capacitor 13 on the left side of the lower stage of the cell group 15 are connected to the bus bar 20, and the projection electrode on the right side of the upper stage of the cell group 15 and the planar electrode of the lithium ion capacitor 13 on the right side of the lower stage of the cell group 15 are connected to the bus bar 20'.

The five bus bars 17 to 20' are each formed by press forming an electrically conductive material with a low resistance value such as nickel, iron, copper, or aluminum or a copper material plated with tin or nickel. Naturally, the shapes and the number of the bus bars to be used differ according to the wiring pattern formed by the four lithium ion capacitors 13. The bus bar 17 used in the embodiment of the present invention includes a through hole 17A and a terminal portion 17B, while the bus bar 18 used in the embodiment of the present invention includes a through hole 18A and a terminal portion 18B.

The bus bars 19, 20, and 20' do not have terminal portions, and respectively include through holes 19A to 20'A. The through holes 17A to 20'A are each formed in order to form a solder reservoir or increase a resistance value when the welding is performed. In the embodiment of the present invention, the bus bars 17 to 20' are connected to the electrodes (9, 11) of the lithium ion capacitors 13 by soldering or resistance soldering, thereby forming the cell assembly 3 in advance.

The first holder 5 is fit on one end of the cell assembly 3, located in the extending direction of the lithium ion capacitors 13. The second holder is fit on the other end of the cell assembly 3, located in the extending direction of the lithium ion capacitors 13. In the embodiment of the present invention, holders of a same shape shown in Figs. 2 and 3 are used as the first holder 5 and the second holder 7.

A structure of the holder 5 will be described below with reference to Figs. 2 and 3, with the holder 5 used as a representative of the holders 5 and 7. The holder 5 used in the embodiment of the present invention is unitarily formed of an insulating resin material, and includes a bottom wall portion 21 and a peripheral wall portion 22. The bottom wall portion 21 has a substantially rectangular contour, and faces the one end or the other end of the cell assembly 3.

The peripheral wall portion 22 is configured to rise from a peripheral edge portion of the bottom wall portion 21 and to extend toward the cell assembly 3. The peripheral wall portion 22 comprises first to fourth side wall portions 22A to 22D that have a same length and are orthogonal to each other. Two side wall opening portions 22E and 22F are formed in the first and third side wall portions 22A and 22C that are opposed to each other. The two side wall opening portions 22E and 22F are configured to communicate with a pair of bottom wall opening portions 21E and 21F formed in the bottom wall portion 21. Two side wall opening portions 22G and 22H are formed in the second side wall portion 22B. Two side wall opening portions 22I and 22J are formed in the fourth side wall portion 22D as well. The two side wall opening portions 22G and 22H and the two side wall opening portions 22I and 22J are each shaped to allow the terminal portion of the bus bar to come out therefrom and to extend in one direction. Then, these two side wall opening portions 22G and 22H are shaped to be plane-symmetrical with respect to a second virtual surface S2 orthogonal to the bottom wall portion 21 and passing through the centers of the second side wall portion 22B and the fourth side wall portion 22D. Then, the two side wall opening portions 22I and 22J are shaped to be plane-symmetrical with respect to the second virtual surface S2.

A pair of mounting holes 27a are formed in the first side wall portion 22A on both sides of an extending direction of a first side 21A. A pair of mounting holes 27a are formed in the third side wall portion 22C on both sides of an extending direction of a third side 21C. The pairs of mounting holes 27a are located on a third virtual surface S3 extending in parallel with the bottom wall portion 21. Though Fig. 2 shows only the pair of mounting holes 27a provided in the third side wall portion 22C, the pair of mounting holes are formed in corresponding positions of the first side wall portion 22A as well. A pair of mounting holes 27b are formed in the second side wall portion 22B on both sides of an extending direction of a second side 21B. A pair of mounting holes 27b are formed in the fourth side wall portion 22D on both sides of an extending direction of a side 21D. The pairs of mounting holes 27b are located on a fourth virtual surface S4 extending in parallel with the third virtual surface S3. Though Fig. 2 shows only the pair of mounting holes 27b provided in the fourth side wall portion 22D, the pair of mounting holes are formed in corresponding positions of the second side wall portion 22B as well.

The bottom wall portion 21 is formed with a center hole 23 at the central portion thereof. A headed screw not shown is inserted into the center hole 23. The headed screw is provided to fix a pillar 16 shown in Fig. 1. As shown in Fig. 3, the bottom wall opening portions 21E and 21F are formed in two opposed sides 21A and 21C in the four sides 21A to 21D of the bottom wall portion 21. Each of the bottom wall opening portions 21E and 21F is formed to be convex toward the center hole 23, passes through a thickness direction of the bottom wall portion 21, and opens in a direction away from the center hole 23. These bottom wall opening portions 21E and 21F are each shaped to be plane-symmetrical with respect to a first virtual surface S1 orthogonal to the bottom wall portion 21 and passing through the centers of the first side wall portion 22A and the third side wall portion 22C. The bottom wall opening portion 21E has a V-shaped contour in which the bottom wall opening portion 21E widens away from the first virtual surface S1 and toward the side wall opening portion 22E. The bottom wall opening portion 21F has a V-shaped contour in which the bottom wall opening portion 21F widens away from the first virtual surface S1 and toward the side wall opening portion 22F. Four through holes 24 are formed in positions through which the first virtual surface S1 and the second virtual surface S2 pass. The first virtual surface S1 is orthogonal to the sides 21A and 21C and passes through the center hole 23, while the second virtual surface S2 is orthogonal to the sides 21B and 21D and passes through the center hole 23. Each of the four through holes 24 has a diameter through which a lead wire for voltage detection may be passed. The four through holes 24 are formed at intervals of 90 degrees centering on the center hole 23. Whatever positional relationship is used to fit the holder 5 on the cell assembly 3, the lead wire for voltage detection may be extracted to an outside through one of the four through holes 24 without having to be lead around a very long distance. Further, four through holes 25 are formed in the bottom wall portion 21 so that the four through holes 25 are located on two diagonal lines assumed for four corners of the bottom wall portion 21. Still further, two through holes 26 are formed at positions of the bottom wall portion 21 through which the second virtual surface S2 passes. These through holes 26 are mounting holes. Four recesses 27c are formed in the bottom wall portion 21, corresponding to four side wall opening portions 22G to 22J. These four recesses 27c are each abutted against the recess of a different holder to form one through hole, thereby allowing a lead wire to be extracted, as in the case of the through hole 24 described above.

There are four fitting portions 28A to 28D in the holder 5. The four fitting portions 28A to 28D are formed by being bordered by the bottom wall portion 21 and the peripheral wall portions 22. End portions of the four lithium ion capacitors 13 are fitted in the four fitting portions 28A to 28D. Spacer receiving depressions 30A to 30D for receiving absorbing spacers not shown are provided at bottom portions corresponding to the four fitting portions 28A to 28D. The absorbing spacers are disposed between the bus bars 17 to 20' and the bottom wall portion 21 in a compressed state. The absorbing spacer is constituted from a ring-shaped rubber. When such an absorbing spacer is provided as necessary, a space between a portion of each bus bar and the respective bottom portions of the fitting portions 28A to 28D is filled in with the absorbing spacer that has been compressed and deformed, regardless of the direction in which the four lithium ion capacitors are disposed. The cell assembly may be thereby held between the first holder 5 and the second holder 7.

A space SP surrounded by the first to fourth side wall portions 22A to 22D and the bottom wall portion 21 is a continuous space that communicates with all the side wall opening portions 22E and 22J and receives the bus bars. Specifically, the continuous space SP of an annular shape is formed by communication of all the fitting portions 28A to 28D. To take an example, the bus bar 19 in Fig. 1 is disposed to extend over two fitting portions 28C and 28D, and the bus bar 18 is disposed to pass through the side wall opening portion 22E from the fitting portion 28A. The bus bar 20 is disposed to extend over two fitting portions 28B and 28C, and the bus bar 20' is disposed to extend over two fitting portions 28A and 28D.

Assume that six side wall opening portions 22E to 22J and two bottom wall opening portions 21E and 21F as mentioned above are provided in each of the holders 5 and 7, and assume that the plurality of cylindrical lithium ion capacitors are connected using each type of wiring patterns such as a parallel connection, a series connection, and a series-parallel connection. Then, with respect to one holder 5, the other holder 7 is rotated to determine a positional relationship between both of the holders 5 and 7. Almost all the wiring patterns may be thereby implemented. Versatility of each holder is thereby enhanced.

The bus bar 17 is disposed in the fitting portion 28B of the holder 5, and the bus bar 18 is disposed in the fitting portion 28A of the holder 5. Then, the terminal portion 17B of the bus bar 17 extends out to the outside from the side wall opening portion 22H, and the terminal portion 18B of the bus bar 18 extends out to the outside from the side wall opening portion 22E. The bus bar 19 is disposed within the two fitting portions 28C and 28D of the holder 5 that communicate with each other. The bus bar 20 is disposed in the two fitting portions 28B and 28C of the holder 7 that communicate with each other. The bus bar 20' is disposed in the two fitting portions 28A and 28D of the holder 7 that communicate with each other.

By assembling a plurality of the electrochemical cell modules 1 in the above-mentioned embodiment and then electrically connecting the plurality of the electrochemical cell modules 1 to one another, an electrochemical cell module of a large capacity may be formed.

Though the lithium ion capacitor is used as the electrochemical cell in the above-mentioned embodiment, an electric double-layer capacitor, a lithium ion battery, or other secondary batteries may be naturally used as the electrochemical cell.

In the electrochemical cell module 1 in the above-mentioned embodiment, the first holder 5 and the second holder 7 are engaged by the support 16. It may be so arranged that a belt-shaped member is disposed to surround the first holder 5, the second holder 6, and the cell assembly 3 and that the belt-shaped member tightens the module from the outside, thereby engaging the first holder 5 and the second holder 7.

The electrochemical cell module 1 includes the cell assembly 3 constituted from the four lithium ion capacitors (electrochemical cells) 13. No particular limitation, however, is imposed on the number of the electrochemical cells included in the cell assembly 3.

Further, in the above-mentioned example, all the bus bars 17 to 20' are of a type configured to connect two adjacent ones of the electrochemical cells. However, a bus bar connected to the electrode of only one electrochemical cell may be naturally included in the electrochemical cell module 1, depending on the wiring pattern.

Two holders of the same shape are employed in the example in Fig. 1. However, holders of different shapes may be naturally combined for use, according to the wiring pattern.

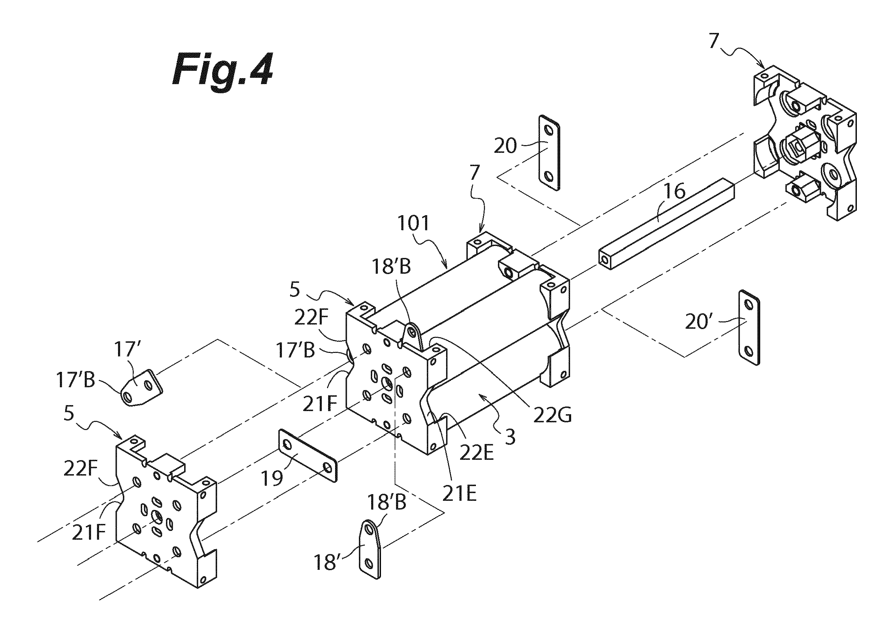

Fig. 4 shows a perspective view used for explaining a configuration of an electrochemical cell module 101, which is a second electrochemical cell module that may be used for the electrochemical cell module unit of the present invention. This electrochemical cell module 101 is different from the electrochemical cell module 1 in Fig. 1 in the shape and the mounting position of a bus bar 17' and the mounting position of a bus bar 18'. That is, in this embodiment, the bus bar 17' comes out from the side wall opening portion 22F so that the terminal portion 17' B of the first holder 5 is exposed. The bus bar 18' is disposed to come out from the side wall opening portion 22G so that a terminal portion 18'B is exposed. In the other respects, the electrochemical cell module 101 has the same configuration as the electrochemical cell module 1 in Fig. 1.

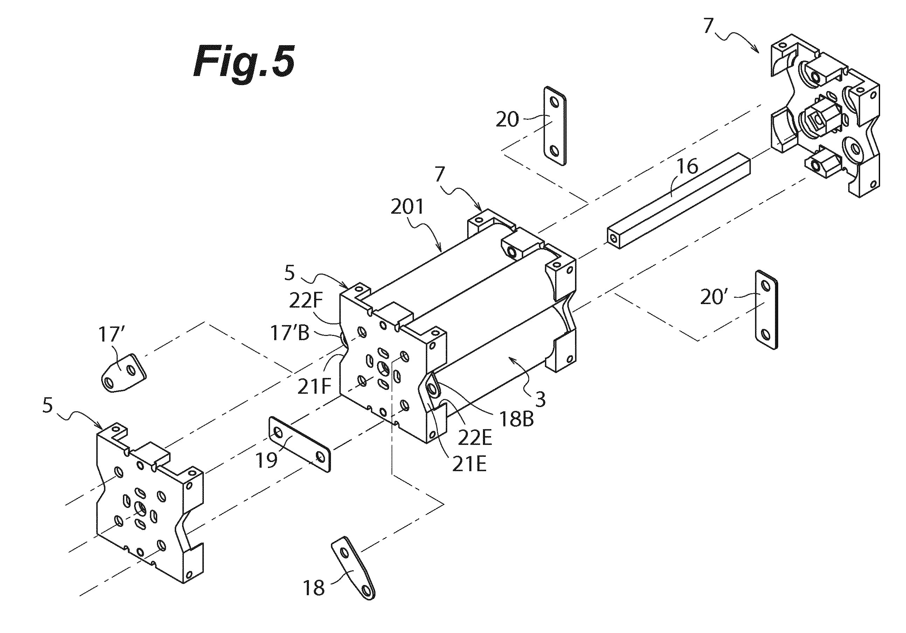

Fig. 5 shows a perspective view used for explaining a configuration of an electrochemical cell module 201, which is a third electrochemical cell module that may be used in the present invention. The electrochemical cell module 201 in a third embodiment is different from the electrochemical cell module 1 in Fig. 1 in the shape and the mounting position of the bus bar 17'. That is, in this embodiment, the bus bar 17' comes out from the side wall opening portion 22F so that the terminal portion 17'B of the first holder 5 is exposed. In the other respects, the electrochemical cell module 201 has the same configuration as the electrochemical cell module 1 in Fig. 1.

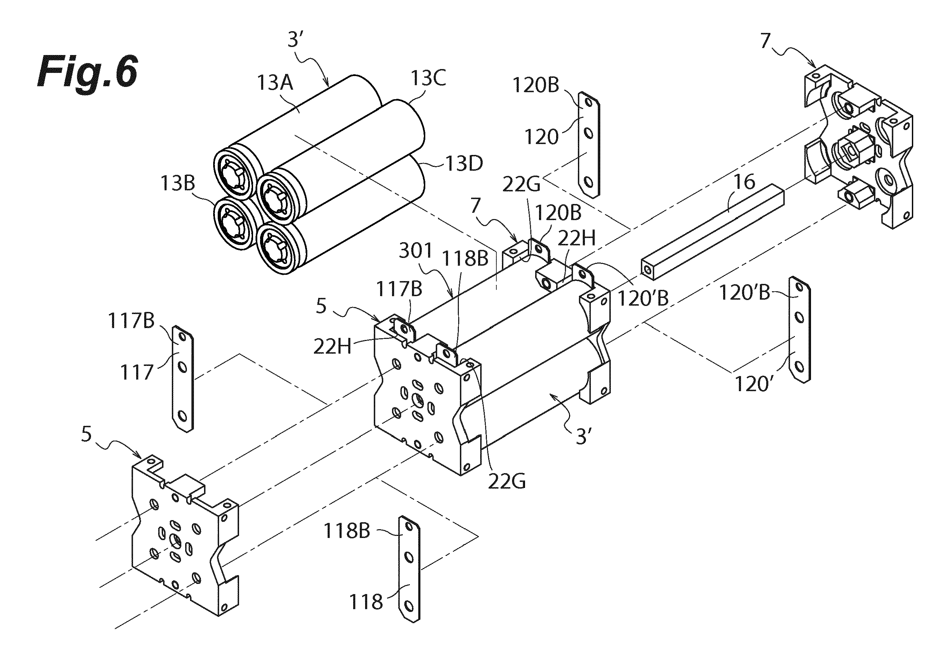

Fig. 6 shows a perspective view used for explaining a configuration of an electrochemical cell module 301, which is a fourth electrochemical cell module that may be used in the present invention. As compared with the electrochemical cell module 1 in Fig. 1, lithium ion capacitors 13A to 13D of a cell assembly 3' are all oriented in a same direction in the electrochemical cell module 301 which is the fourth electrochemical cell module. A bus bar 117 is connected to projection electrodes of upper and lower two lithium ion capacitors 13A and 13B, and a terminal portion 117B comes out from the side wall opening portion 22H of the first holder 5. A bus bar 118 is connected to projection electrodes of upper and lower two lithium ion capacitors 13C and 13D, and a terminal portion 118B comes out from the side wall opening portion 22G of the first holder 5. A bus bar 120 is connected to planar electrodes of the upper and lower two lithium ion capacitors 13A and 13B, and a terminal portion 120B comes out from the side wall opening portion 22G of the second holder 7. A bus bar 120' is connected to planar electrodes of the upper and lower two lithium ion capacitors 13C and 13D, and a terminal portion 120' B comes out from the side wall opening portion 22G of the second holder 7. The terminal portions 117B and 118B constitute a minus terminal, and the terminal portions 120B and 120B' constitutes a plus terminal, for example. In the other respects, the electrochemical cell module 301 has the same configuration as the electrochemical cell module 1 in Fig. 1.

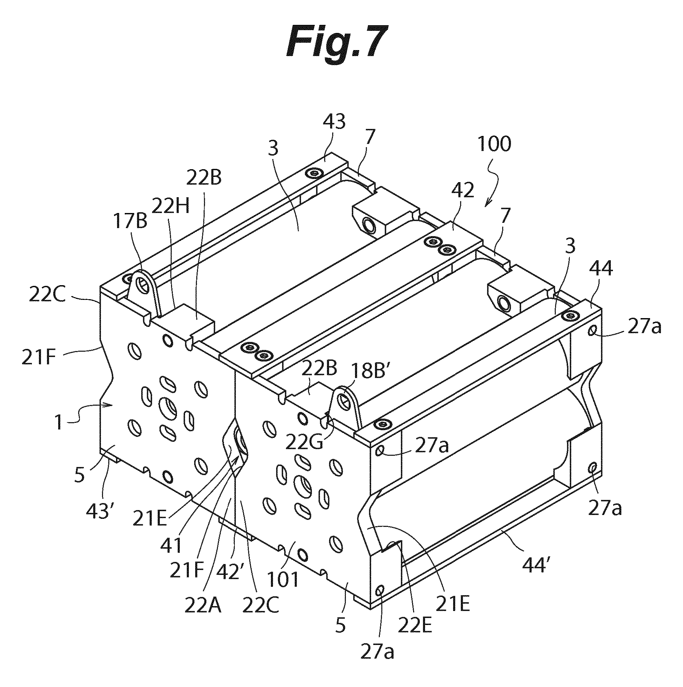

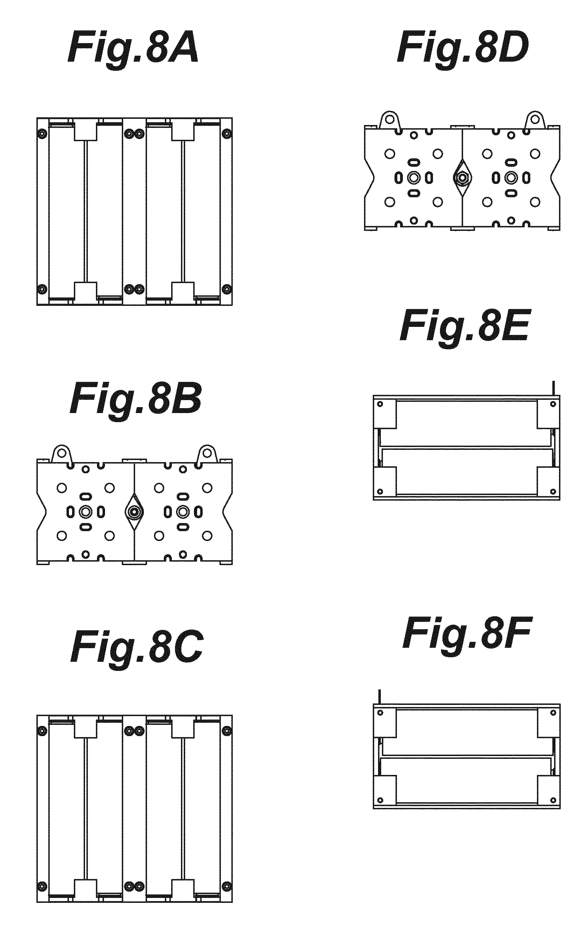

By juxtaposing the above-mentioned electrochemical cell modules 1, 101, 201, and 301, an electrochemical cell module unit may be formed. Fig. 7 is a perspective view of an electrochemical cell module unit 100 in a first embodiment of the present invention in which the electrochemical cell modules 1 and 101 are juxtaposed to form one module row. This embodiment has a structure in which eight lithium ion capacitors are connected in series. Figs. 8A to 8F are respectively a top view, a front view, a bottom view, a back view, a left side view, and a right side view of the electrochemical cell module unit 100. In the electrochemical cell module 1, the terminal portion 18B of one bus bar 18 is exposed at the bottom wall opening portion 21E continuous with the side wall opening portion 22E opening in the first side wall portion 22A of the first holder 5. The terminal portion 17B of the bus bar 17 comes out from the side wall opening portion 22H opening in the second side wall portion 22B of the first holder 5. In the electrochemical cell module 101, the terminal portion 17' B of one bus bar 17' is exposed at the bottom wall opening portion 21F continuous with the side wall opening portion 22F opening in the third side wall portion 22C of the first holder 5. The terminal portion 18'B of the bus bar 18' is exposed from the side wall opening portion 22G of the second side wall portion 22B. In the electrochemical cell module unit 100, two electrochemical cell modules 1 and 101 that are adjacent to each other are juxtaposed to form one through hole 41 by abutting the side wall opening portions 22E and 22F and the bottom wall opening portions 21E and 21F. The electrochemical cell module 1 of the two adjacent electrochemical cell modules 1 and 101 exposes the terminal portion 18B of the bus bar 18 not shown at the bottom wall opening portion 21E, while the electrochemical cell module 101 of the two adjacent electrochemical cell modules 1 and 101 exposes the terminal portion 17'B of the bus bar 17' not shown at the bottom wall opening portion 21F. The bottom wall opening portions 21E and 21F form the through hole 41. Then, two terminal portions 18B and 17'B located in the through hole 41 are electrically and mechanically connected with a bolt. When such a structure is adopted, electrical connection may be made at the abutted portions between the two adjacent electrochemical cell modules 1 and 101 to facilitate the connection between the electrochemical cell modules 1 and 101. In addition, a variation of a pattern for the connection may be increased.

The two electrochemical cell modules 1 and 101 in this embodiment are connected by common connecting plates 42 and 42' extending over the respective first holders 5 and the respective second holders 7 of the two electrochemical cell modules 1 and 101 in boundary regions between both of the two electrical chemical cell modules 1 and 101. When such common connecting plates 42 and 42' are used, connection strength between the two electrochemical cell modules 1 and 101 may be increased. The cell module 1 of the two electrochemical cell modules 1 and 101 in this embodiment is connected by auxiliary connecting plates 43 and 43'. The cell module 101 of the two electrochemical cell modules 1 and 101 in this embodiment is connected by auxiliary connecting plates 44 and 44'. The auxiliary connecting plates 43 and 44 are positioned at two locations that sandwich the common connecting plate 42. The auxiliary connecting plates 43' and 44' are positioned at two locations that sandwich the common connecting plate 42'. When the auxiliary connecting plates 43 and 43' , and 44 and 44'are used, the first holders 5 and the second holders 7 of the electrochemical cell module 1 and the electrochemical cell module 101 may be clearly prevented from coming off from the cell assembly 3.

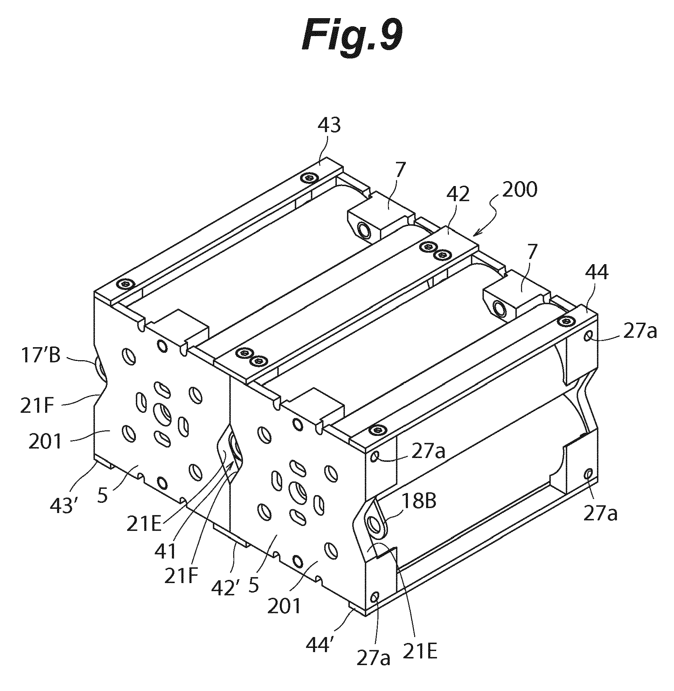

In an electrochemical cell module 200 in a second embodiment of the present invention shown in Fig. 9, two electrochemical cell modules 201 shown in Fig. 5 are juxtaposed to form one module row. As a result, the electrochemical cell module unit 200 has a structure in which eight lithium ion capacitors are connected in series. In the electrochemical cell modules 201, the terminal portion 18B of the bus bar 18 is exposed from the side wall opening portion 22E of the first side wall portion 22A. The terminal portion 17'B is exposed from the side wall opening portion 22F of the third side wall portion 22C. Then, the two electrochemical cell modules 201 are juxtaposed to form one through hole 41 by abutting the side wall opening portions 22E and 22F and the bottom wall opening portions 21E and 22F. One of the two adjacent electrochemical cell modules 201 exposes the terminal portion 18B of the bus bar 18 not shown at the bottom wall opening portion 21E, while the other of the two adjacent electrochemical cell modules 201 exposes the terminal portion 17'B of the bus bar 17' not shown at the bottom wall opening portion 22F. The bottom wall opening portion 21E and 22F form the through hole 41. Then, two terminal portions 18B and 17'B located in the through hole 41 are connected with a bolt to electrically connect the two terminal portions 18B and 17'B.

The two electrochemical cell modules 201 in this embodiment are also connected by the common connecting plates 42 and 42' extending over the respective first holders 5 and the respective second holders 7 of the two electrochemical cell modules 201 in boundary regions between both of the two electrical chemical cell modules 201. One of the two electrochemical cell modules 201 is connected by the auxiliary connecting plates 43 and 43', and the other of the two electrochemical cell modules 201 is connected by the auxiliary connecting plates 44 and 44', in this embodiment as well. The auxiliary connecting plates 43 and 44 are positioned at two locations that sandwich the common connecting plate 42. The auxiliary connecting plates 43' and 44' are positioned at two locations that sandwich the common connecting plate 42'.

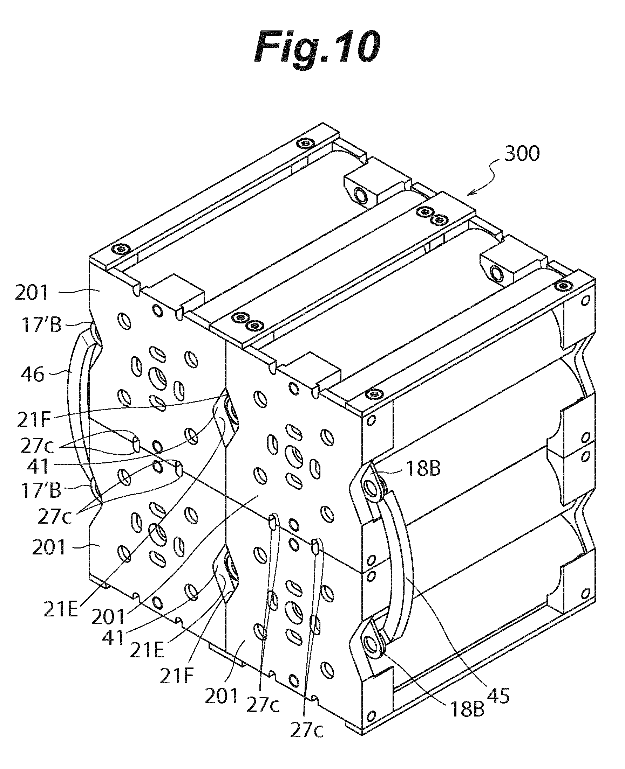

In an electrochemical cell module unit 300 in Fig. 10, two module rows 302 and 303 formed by juxtaposing two electrochemical cell modules 201 shown in Fig. 5 are stacked up and down on the page of Fig. 10 in the same vertical positional relationship between the electrochemical cell modules 201. This embodiment has a structure in which two series circuits formed by connecting eight lithium capacitors in series are connected in parallel. Two concave portions 27c are abutted at each boundary portion between two electrochemical cell module units 200. Four through holes for extracting lead wires are thereby formed. In this electrochemical cell module unit 300, a plurality of the terminal portions 18B that constitute a terminal column are electrically connected to each other by a connecting conductor in a lead wire 45, which is electrical connection means. Further, a plurality of the terminal portions 17'B that constitute a terminal column are electrically connected to each other by a connecting conductor in a lead wire 46. An output is obtained by connecting lead wires for output to one of connecting portions of the lead wire 45 and one of connecting portions of the lead wire 46.

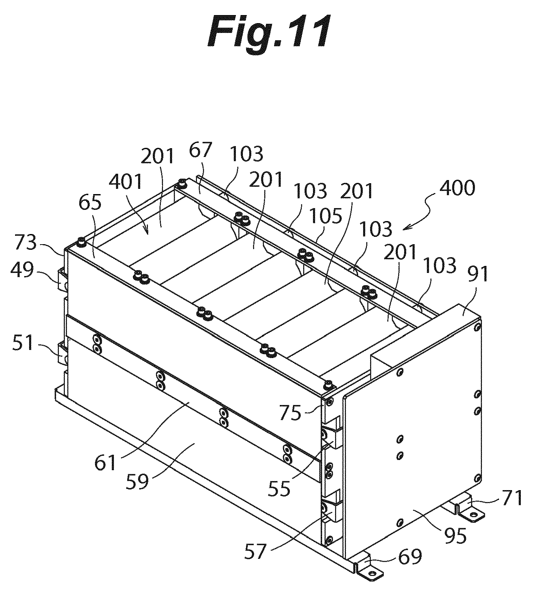

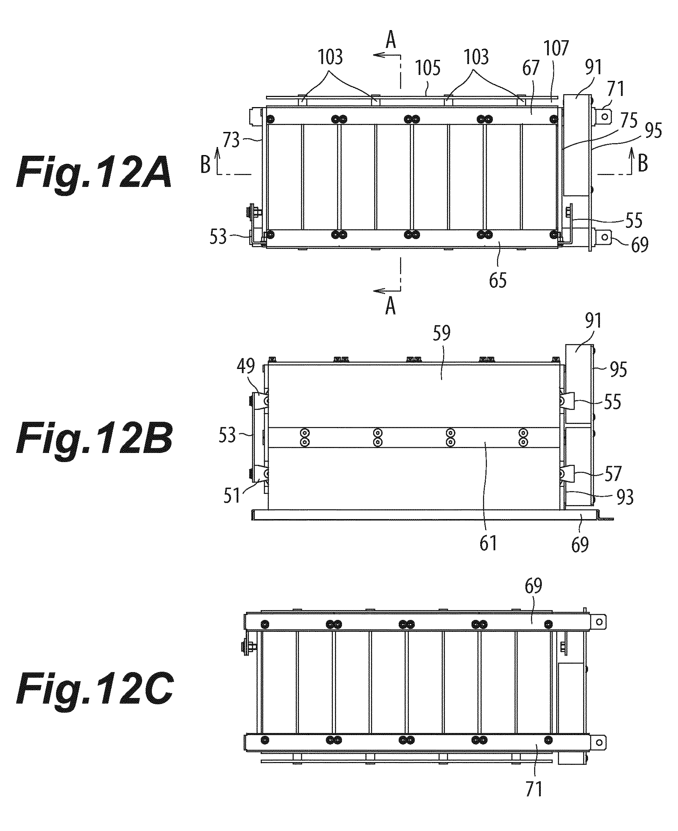

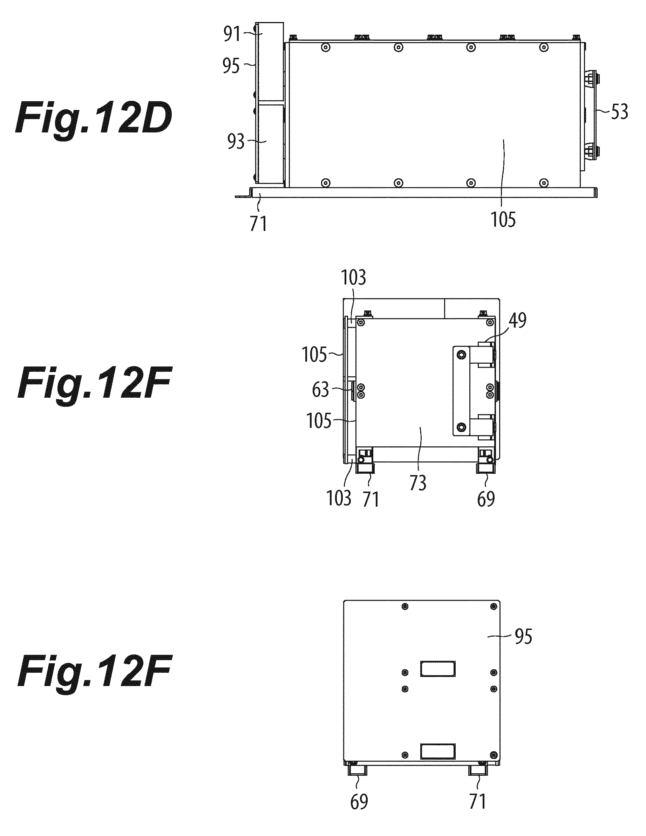

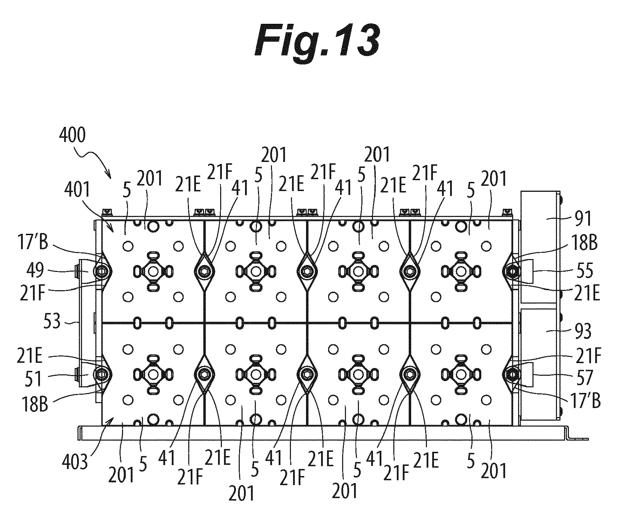

Fig. 11 is a perspective view of an electrochemical cell module unit 400 in a third embodiment of the present invention. Figs. 12A to 12F are respectively a top view, a front view, a bottom view, a back view, a left side view, and a right side view of the electrochemical cell module unit 400. Fig. 13 is a front view showing the electrochemical cell module unit 400 with an insulating resin sheet that covers the side surface of the electrochemical cell module unit 400 on a front side and a connecting plate removed therefrom, in order to facilitate understanding. In this electrochemical cell module unit 400, a module row 401 and a module row 403 are juxtaposed in a vertically stacked arrangement on the page of Fig. 11. In each of the module rows 401 and 403, four electrochemical cell modules 201 are disposed to form a row. The module row 401 and the module row 403 have a positional relationship in which one of the module rows 401 and 403 is obtained by 180 degree rotation of the other of the module rows 401 and 403. As a result, the terminal portion 18B comes out of the first holder 5 in the upper module row 401 at a different angle from that in the lower module row 403, and the terminal portion 17'B comes out of the first holder 5 in the upper module row 401 at a different angle from that in the lower module row 403. The electrochemical cell module unit 400 in this embodiment has a structure in which two series circuits formed by connecting 18 lithium ion capacitors in series are further connected in series.

In this embodiment as well, the terminal portions of the bus bars of two adjacent electrochemical cell modules 201 are connected in the through hole 41 formed between the first holders 5 of the two adjacent electrochemical cell modules 201. The electrochemical cell modules 201 located on both ends of each of the two module rows 401 and 403 respectively include the bottom wall opening portions 21E and 21F and respectively include another side wall opening portions 22E and 22F (not shown in Fig. 13) in another side wall portions opposed to the side wall portions with the side wall opening portions 22F and 22E formed therein and facing each other to form the through hole 41. The electrochemical cell modules 201 located on the both ends of each of the two module rows 401 and 403 respectively expose the terminal portion 17'B of one bus bar 17 as an output bus bar and the terminal portion 18B of one bus bar 18 as an output bus bar from the another side wall opening portions. In this embodiment, the terminal portions 17'B and 18B of two output bus bars of the two module rows 401 and 403 are connected by electrical connection means (49 to 53) in order to connect two module rows 401 and 493 in series. The electrical connection means (49 to 53) in this embodiment is constituted from L-shaped fittings 49 and 51 connected to the terminal portions 17'B and 18B of the output bus bars and a rectangular fitting 53 configured to mutually connect the fittings 49 and 51 for terminal. By connecting the two module rows 401 and 403 by the bus bars (49 to 53) for connection in this manner, the electrochemical cell module unit 400 with a necessary voltage and a necessary capacity may be readily constructed.

Output terminal metal fittings 55 and 57 are attached to the terminal portions 18B and 17'B for output of the module rows 401 and 403 located on an opposite side of two bus bars (49 to 53) for connection.

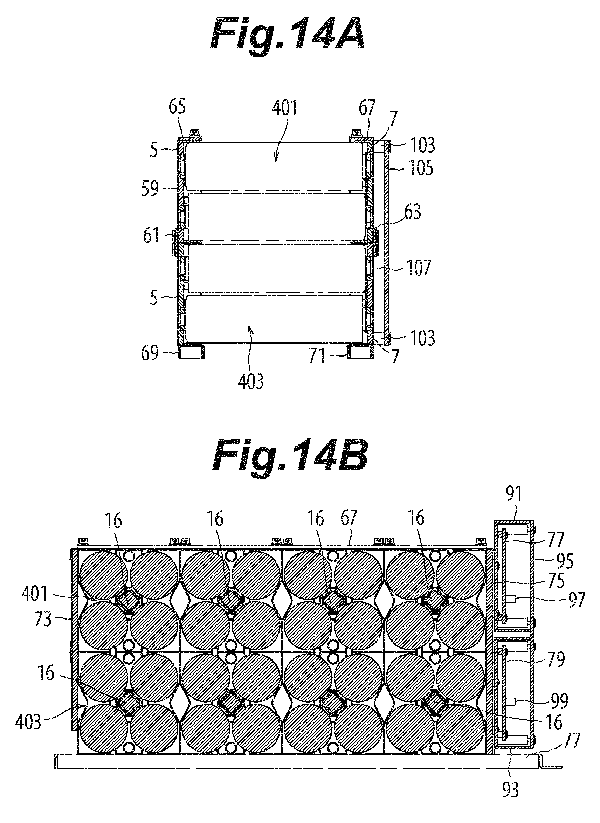

The bottom wall portions of the first holders 5 of eight electrochemical cell modules 201 of the two module rows 401 and 403 are covered with one insulating resin sheet 59 with a thickness of approximately 0.35 mm, as shown in Figs. 11 and 12A. In this embodiment, this insulating resin sheet 59 is fixed by a connecting plate 61 made of SUS, with bottom wall surfaces of eight first holders 5 covered with the insulating resin sheet 59, as shown in Fig. 14A showing a section taken along an A - A line in Fig. 12A. The connecting plate 61 is fixed to each of four first holders 5 of the module row 401 located on an upper side and each of four first holders 5 of the module row 403 located on a lower side, with screws. Four second holders 7 of the module row 401 located on the upper side and four second holders 5 of the module row 403 located on the lower side are also fixed by a connecting plate 63 made of SUS. The connecting plate 61 is fixed to each of the four second holders 7 of the module row 401 located on the upper side and each of the four first holders 7 of the module row 403 located on the lower side, with screws.

In this embodiment, the four first holders 5 included in the module row 401 located on the upper side are respectively connected by a connecting plate 65, and the four second holders 7 included in the module row 401 are respectively connected by a connecting plate 67. A first slide rail 69 is fixed under the four first holders 5 included in the module row 403 located on the lower side, while a second slide rail 71 is fixed under the four second holders 7 included in the module row 403. With this arrangement, when a plurality of module rows are disposed adjacent to each other in a vertical direction, a robust structure may be constructed, without using a case. In addition, by providing the first slide rail 69 and the second slide rail 71, the following advantage may be obtained. That is, mounting, inspection, and replacement of the electrochemical cell module unit 400 is facilitated. Naturally, a pair of guides configured to slidably support the first slide rail 69 and the second slide rail 71 are fixed to the mounting surface of a device where this electrochemical cell module unit is mounted.

One end surface of the two module rows 401 and 403 on one end side excluding the electrical connection means (49 to 31) is largely covered with an insulating resin plate 73. In this embodiment, a slight gap is formed under the insulating resin plate 73. The other end surface of the module rows 401 and 403 on the other end side excluding pullout portions of the output terminal metal fittings 55 and 57 is covered with an insulating resin plate 75. When such insulating resin plates 73 and 75 are used, occurrence of a short circuit with a device disposed around the electrochemical cell module unit may be prevented.

As shown in a section taken along a B - B line of Fig. 12A and shown in Fig. 14B, control boxes 91 and 93 are disposed on the other end side of the two module rows 401 and 403. Two circuit substrates 77 and 79 for voltage control respectively configured to control a voltage of each electrochemical cell module in the two module rows 401 and 403 are respectively held in the control boxes 91 and 93. In this embodiment, the two control boxes 91 and 93 are covered with one translucent lid plate 95 made of an insulating resin. Then, inside the control box 91, status display means 97 indicating a status of the module row 401 is disposed on a side surface located on the other end side of the module rows 401 and 403. Further, inside the control box 93, status display means 99 indicating a status of the module row 493 is disposed on the side surface located on the other end side of the module rows 401 and 403. In this embodiment, each of the status display means 97 and 99 is driven by a status determination circuit, and is formed of a light-emitting diode. The light-emitting diode emits light when the electrochemical cell modules in each of the module rows that face each other are in a normal state. Since a portion of the lid plate 95 corresponding to the light-emitting diode is translucent, a light-emitting state of the light-emitting diode may visually be recognized from the outside. When such control boxes 91 and 93 are employed, manufacture of the electrochemical cell module unit 400 is facilitated because the control boxes may be manufactured in advance. Further, when the status display means 97 and 99 are provided in the control boxes, the status of each module row may be readily checked visually.

As shown in Figs. 12A, 12C, and 12D, an insulating resin plate 105 is disposed through a plurality of spacers 103 to oppose the back surface where the connecting plate 63 configured to connect the two module rows 401 and 403 is located. As a result, a space 107 corresponding to the dimension of the spacers 103 may be secured. In this embodiment, this space 107 secures a path for a plurality of lead wires not shown from each electrochemical cell module 201 to one of the circuit substrates 77 and 79 for voltage control in the control boxes 91 and 93. A temperature sensor and a voltage detection terminal are provided at each electrochemical cell module, and the lead wires are extracted from these sensor and terminal.

In the above-mentioned embodiment shown in Figs. 11 to 14, the two module rows alone are provided. The number of the module rows is, however, arbitrary. A plurality of the module rows may be connected in an arbitrary manner. Though no case for covering the whole of the electrochemical cell module unit is provided in the above-mentioned embodiment, the case for covering the whole of the electrochemical cell module unit may be provided. In that case, the insulating resin sheet 59, and the insulating resin plates 73, 75, and 105 are not necessary. Then, the control boxes may be disposed outside the case, or may be disposed inside the case. When the control boxes are disposed outside the case, manufacture of the electrochemical cell module unit as a whole is facilitated.

The lithium ion capacitor is employed as the electrochemical cell in the electrochemical cell module unit in each of the above-mentioned embodiments. Needless to say, capacitors of other types or secondary batteries including a lithium ion battery may be employed as the electrochemical cells.

### INDUSTRIAL APPLICABILITY

When the terminal portions of the bus bars of two electrochemical cell modules adjacent to each other in the through hole formed between the two adjacent electrochemical cell modules are connected, the two adjacent electrochemical cell modules may be electrically and mechanically connected with a simple structure. When such a structure is employed, electrical connection may be made at the abutted portions of the two adjacent electrochemical cell modules. A variation of a pattern for the connection may be thereby increased.

### REFERENCE SIGNS LIST

- 1: Electrochemical cell module
- 3: Cell assembly
- 5: First holder
- 7: Second holder
- 13: Lithium ion capacitor (electrochemical cell)
- 15: Cell group
- 16: Pillar
- 17∼20': Bus bar
- 17B, 17B', 18B: Terminal portion
- 21: Bottom wall portion
- 21E, 21F: Bottom wall opening portion
- 22: Peripheral wall portion
- 22A∼22D: Side wall portion
- 22E∼22H: Side wall opening portion
- 23: Center hole
- 24: Through hole
- 25: Through hole
- 26: Through hole
- 28A∼28D: End portion fitting concave portion
- 30A∼30D: Space receiving concave portion
- 41: Through hole
- 101, 201: Electrochemical cell module
- 100, 300, 400: Electrochemical cell module unit
- 302, 303, 401, 403: Module row

## Claims

1. An electrochemical cell module unit formed by combining a plurality of electrochemical cell modules, wherein:
the plurality of electrochemical cell modules each comprise:
a cell assembly comprising:
a cell group including a plurality of cylindrical electrochemical cells arranged juxtaposedly, the plurality of cylindrical electrochemical cells each including electrodes at both ends thereof; and
a plurality of bus bars disposed on both sides of an extending direction of the plurality of cylindrical electrochemical cells of the cell group and connected to one or more of the electrodes of one or more of the cylindrical electrochemical cells so that the plurality of electrochemical cells are electrically connected with a predetermined wiring pattern;
a first holder fitted on one end of the cell assembly, located in the extending direction of the plurality of electrochemical cells; and
a second holder fitted on the other end of the cell assembly, located in the extending direction of the plurality of electrochemical cells;
the first and second holders each comprise:
a bottom wall portion having first to fourth sides and opposed to the one end of the cell assembly; and
a peripheral wall portion constituted from four side wall portions configured to rise from the first to fourth sides of the bottom wall portion and to extend toward the cell assembly;
one side wall opening portion is provided in one of the four side wall portions of the first holder or the second holder in each of every adjacent two of the electrochemical cell modules, the one of the four side wall portions of the first holder or the second holder in one of the adjacent two of the electrochemical cell modules being in contact with the one of the four side wall portions of the first holder or the second holder in the other of the adjacent two of the electrochemical cell modules, the one side wall opening portion in each of every adjacent two of the electrochemical cell modules being configured to allow a terminal portion of the bus bar to come out therefrom to an outside, and a bottom wall opening portion continuous with the one side wall opening portion is provided in the bottom wall portion of the first holder or the second holder;
the adjacent two of the electrochemical cell modules are juxtaposed to form one through hole by abutting the side wall opening portions and the bottom wall opening portions of the adjacent two of the electrochemical cell modules;
the adjacent two of the electrochemical cell modules each expose the terminal portion of one of the bus bars at the bottom wall opening portion configured to form the through hole; and
the adjacent two of the electrochemical cell modules are electrically connected by connection of two of the terminal portions located in the through hole.

2. The electrochemical cell module unit according to claim 1, wherein:
the electrochemical cell module unit has a structure in which a plurality of module rows are juxtaposed, the plurality of module rows being each formed by disposing a plurality of the electrochemical cell modules to form a row;
the electrochemical cell modules located on both ends of the plurality of module rows each include another side wall opening portion in another one of the four side wall portions opposed to the one of the four side wall portions with the one side wall opening portion formed therein, and exposes one of the bus bars as an output bus bar from the another side wall opening portion; and
a plurality of the output bus bars in the plurality of module rows are connected by electrical connection means so that the plurality of module rows are connected in series or in parallel.

3. The electrochemical cell unit according to claim 2, wherein:
a control box with a plurality of circuit substrates for voltage control held therein is disposed on the other side of the plurality of module rows, each circuit substrate being configured to control a voltage of each of the plurality of module rows; and
status display means for indicating a status of each of the module rows is disposed on a side surface of the control box located on the other side of the module rows.

4. The electrochemical cell module unit according to claim 2, wherein:
the plurality of module rows are disposed adjacent to each other in a vertical direction; and
the plurality of the bottom wall portions of the plurality of the first holders of the plurality of electrochemical cell modules in the plurality of module rows are covered with one insulating resin sheet.

5. The electrochemical cell module unit according to claim 4, wherein:
the plurality of module rows are disposed adjacent to each other in the vertical direction;
a plurality of the first holders included in an uppermost one of the module rows are respectively connected by a first connecting plate;
a plurality of the second holders included in the uppermost one of the module rows are respectively connected by a second connecting plate;
a plurality of the first holders included in an upper one of every two module rows adjacent in the vertical direction and a plurality of the first holders included in a lower one of the two module rows adjacent in the vertical direction are connected by a third connecting plate;
a plurality of the second holders included in the upper one of the two module rows adjacent in the vertical direction and a plurality of the second holders included in the lower one of the two module rows adjacent in the vertical direction are connected by a fourth connecting plate;
a first slide rail is fixed under a plurality of the first holders included in a lowermost one of the module rows; and
a second slide rail is fixed under a plurality of the second holders included in the lowermost one of the module rows.

6. The electrochemical cell module unit according to claim 5, wherein:
one end surface of the plurality of module rows excluding at least the electrical connection means is covered with an insulating resin plate; and
the other end surface of the plurality of module rows excluding at least the electrical connection means or terminal portions is covered with an insulating resin plate.

7. The electrochemical cell module unit according to claim 5, wherein:
an insulating resin plate is disposed through a plurality of spacers so that the insulating resin plate opposes a side surface where the fourth connecting plate for the plurality of module rows is located.

8. The electrochemical cell module according to claim 1, wherein:
the first and second holders in the electrochemical cell module have the same shape;
one or more of the side wall opening portions configured to allow the terminal portion of the bus bar to come out therefrom are provided in each of the four side wall portions; and
a space surrounded by the four side wall portions and the bottom wall portion is a continuous space configured to communicate with all of the side wall opening portions and to receive the plurality of bus bars.

9. The electrochemical cell module according to claim 8, wherein:
one of the side wall opening portions provided in at least one of the four side wall portions is shaped to allow the bus bar to come out therefrom and to extend in a plurality of different directions.

10. The electrochemical cell module unit according to claim 1, wherein:
the one side wall opening portion and the bottom wall opening portion continuous with the one side wall opening portions are respectively shaped to be plane-symmetrical with respect to a first virtual surface orthogonal to the bottom wall portion and passing through the centers of the first and third side wall portions.

11. The electrochemical cell module unit according to claim 10, wherein:
the bottom wall opening portion has a V-shaped contour in which the bottom wall opening portion widens away from the first virtual surface and toward the side wall opening portion.

12. The electrochemical cell module unit according to claim 1, wherein:
a plurality of the cell groups of the two of the electrochemical cell modules are connected in series through a plurality of the bus bars.

13. An electrochemical cell module comprising:
a cell assembly comprising:
a cell group including a plurality of cylindrical electrochemical cells arranged juxtaposedly, the cylindrical electrochemical cells each including electrodes at both ends thereof; and
a plurality of bus bars disposed on both sides of an extending direction of the plurality of cylindrical electrochemical cells of the cell group and connected to one or more of the electrodes of one or more of the cylindrical electrochemical cells so that the plurality of electrochemical cells are electrically connected with a predetermined wiring pattern;
a first holder fitted on one end of the cell assembly, located in the extending direction of the plurality of electrochemical cells; and
a second holder fitted on the other end of the cell assembly, located in the extending direction of the plurality of electrochemical cells, wherein
the first and second holders each comprise:
a bottom wall portion having first to fourth sides and opposed to the one end of the cell assembly; and
a peripheral wall portion constituted from first to fourth side wall portions configured to rise from the first to fourth sides of the bottom wall portion and to extend toward the cell assembly;
one or more side wall opening portions are provided in each of the first to four side wall portions, the one or more side wall opening portion being each configured to allow a terminal portion of each of the bus bars to come out therefrom to an outside; and
a space surrounded by the first to fourth side wall portions and the bottom wall portion is a continuous space configured to communicate with all of the side wall opening portions and to receive the plurality of bus bars.

14. The electrochemical cell module according to claim 13, wherein:
one of the side wall opening portions provided in at least one of the first to fourth side wall portions is shaped to allow the bus bar to come out therefrom and to extend in a plurality of different directions.

15. The electrochemical cell module according to claim 14, wherein:
the one side wall opening portion is provided in each of the first and third side wall portions opposed to each other in the first to fourth side wall portions, and a bottom wall opening portion continuous with the one side wall opening portion is provided in the bottom wall portion.

16. The electrochemical cell module according to claim 15, wherein:
the one side wall opening portion and the bottom wall opening portion continuous with the one side wall opening portion are respectively shaped to be plane-symmetrical with respect to a first virtual surface orthogonal to the bottom wall portion and passing through the centers of the first and third side wall portions.

17. The electrochemical cell module according to claim 16, wherein:
the bottom wall opening portion has a V-shaped contour in which the bottom wall portion widens away from the first virtual surface and toward the side wall opening portion.

18. The electrochemical cell module according to claim 16, wherein:
the two side wall opening portions are provided in each of the second and fourth side wall portions opposed to each other in the first to fourth side wall portions, the two side wall opening portions are each shaped to allow the terminal portion of the bus bar to come out therefrom and to extend in one direction, and the two side wall opening portions are shaped to be plane-symmetrical with respect to a second virtual surface orthogonal to the bottom wall portion and passing through the centers of the second and fourth side wall portions.

19. The electrochemical cell module according to any thirteen of claims 1 to 6, wherein:
a pair of mounting holes are formed in the first side wall portion on both sides of an extending direction of the first side, the pair of mounting holes being located on a third virtual surface extending in parallel with the bottom wall portion;
a pair of mounting holes are formed in the second side wall portion on both sides of an extending direction of the second side, the pair of mounting holes being located on a fourth virtual surface extending in parallel with the third virtual surface;
a pair of mounting holes are formed in the third side wall portion on both sides of an extending direction of the third side, the pair of mounting holes being located on the third virtual surface extending in parallel with the bottom wall portion; and
a pair of mounting holes are formed in the fourth side wall portion on both sides of an extending direction of the fourth side, the pair of mounting holes being located on the fourth virtual surface extending in parallel with the third virtual surface.

20. The electrochemical cell module according to any one of claims 13 to 19, wherein:
the first and second holders have a same shape and are fitted on the both ends of the cell assembly in a symmetrical manner.

21. A holder to be fitted on each side of a cell assembly located in an extending direction of a plurality of cylindrical electrochemical cells in an electrochemical cell module,
the cell assembly comprising:
a cell group including a plurality of cylindrical electrochemical cells arranged juxtaposedly, the plurality of cylindrical electrochemical cells each including electrodes at both ends thereof; and
a plurality of bus bars disposed on both sides of the extending direction of the plurality of cylindrical electrochemical cells of the cell group and connected to one or more of the electrodes of one or more of the cylindrical electrochemical cells so that the plurality of electrochemical cells are electrically connected with a predetermined wiring pattern, wherein
the holder comprises:
a peripheral wall portion constituted from first to fourth side wall portions configured to rise from the first to fourth sides of the bottom wall portion and to extend toward the cell assembly;
one or more side wall opening portions are provided in each of the first to fourth side wall portions, the one or more side wall opening portions each allowing a terminal portion of the bus bar to come out therefrom to an outside; and
a space surrounded by the first to fourth side wall portions and the bottom wall portion is a continuous space configured to communicate with all of the side wall opening portions and to receive the plurality of bus bars.

22. The holder according to claim 21, wherein:
one of the side wall opening portions provided in at least one of the first to fourth side wall portions is shaped to allow the bus bar to come out therefrom and to extend in a plurality of different directions.

23. The holder according to claim 22, wherein:
the one side wall opening portion is provided in each of the first and third side wall portions opposed to each other in the first to fourth side wall portions, and a bottom wall opening portion continuous with the one side wall opening portion is provided in the bottom wall portion.

24. The holder according to claim 23, wherein:
the one side wall opening portion and the bottom wall opening portion continuous with the one side wall opening portion are respectively shaped to be plane-symmetrical with respect to a first virtual surface orthogonal to the bottom wall portion and passing through the centers of the first and third side wall portions.

25. The holder according to claim 23, wherein:
the bottom wall opening portion has a V-shaped contour in which the bottom wall opening portion widens away from the first virtual surface and toward the side wall opening portion.

26. The holder according to claim 23, wherein:
the two side wall opening portions are provided in each of the second and fourth side wall portions opposed to each other in the first to fourth side wall portions, the two side wall opening portions are each shaped to allow the terminal portion of each of the bus bars to come out therefrom in one direction, and the two side wall opening portions are shaped to be plane-symmetrical with respect to a second virtual surface orthogonal to the bottom wall portion and passing through the centers of the second and fourth side wall portions.

27. The holder according to any one of claim 21, wherein:
a pair of mounting holes are formed in the first side wall portion on both sides of an extending direction of the first side, the pair of mounting holes being located on a third virtual surface extending in parallel with the bottom wall portion;
a pair of mounting holes are formed in the second side wall portion on both sides of an extending direction of the second side, the pair of mounting holes being located on a fourth virtual surface extending in parallel with the third virtual surface;
a pair of mounting holes are formed in the third side wall portion on both sides of an extending direction of the third side, the pair of mounting holes being located on the third virtual surface extending in parallel with the bottom wall portion; and
a pair of mounting holes are formed in the fourth side wall portion on both sides of an extending direction of the fourth side, the pair of mounting holes being located on the fourth virtual surface extending in parallel with the third virtual surface.
